# EUROPEAN PATENT APPLICATION

(11) **EP 4 711 200 A1**
(43) Date of publication of application: **18.03.2026**
(21) Application number: 24461620.7
(22) Date of filing: 13.09.2024
(51) Int. Cl.: B60N 2/874, B60N 2/897, B64D 11/06, B60N 2/02

(54) **HEADREST**

(71) Applicant: B/E Aerospace Fischer GmbH, 84034 Landshut (DE)
(72) Inventor: CHODYNIECKI, Marcin Adam, 51-317 Wroclaw (PL); KALISZCZYK, Piotr Krzysztof, 51-317 Wroclaw (PL); KOLODZIEJCZAK, Marcin Szymon, 51-317 Wroclaw (PL)
(74) Representative: Dehns

(57) **Abstract**

A headrest assembly comprising: a headrest (10); and a mounting assembly (20) for mounting the headrest, in use, to a seat back (30), the mounting assembly comprising: a first rod (21) extending from a bottom of the headrest at a first location; a second rod (22) extending from the bottom of the headrest at a second location; a first mounting part (24) having a housing (241) with a channel (242) extending therethrough defining an axis (A) and arranged to receive the first rod (21) for rotation about the axis relative to the housing, the first mounting part configured to be attached, in use, to the seat back; a second mounting part (25) having a housing with a channel (252) extending therethrough arranged to receive the second rod (22), the housing (251) of the second mounting part (25) being rotatable relative to the second rod (22) and having a cut-out (253) therethrough via which the second rod (22) can exit the second mounting part channel (252).

## Description

### TECHNICAL FIELD

The present disclosure relates to a seat headrest.

### BACKGROUND

Seats, particularly in vehicles or in other environments where a user is seated while performing tasks, such as a pilot seat in an aircraft or a helicopter pilot seat, are often provided with a headrest portion extending from the seat back to support the user's head while seated for increased safety and comfort. Some headrests are formed integrally with the seat back. Others may be mounted permanently or removably to the seat and may be adjustable in height or angle to accommodate users of different sizes.

Whilst such headrests are desirable in terms of comfort and safety, there may be situations where the headrest obstructs the user's access to an area behind the seat. In a helicopter, for example, there is often a shelf or storage area behind a seat, or, in aircraft or other environments, the user may need to access controls, lights, accessories or other things from the area behind the seat without actually moving to the area behind the seat. Because of the task that the user is performing, or because of space constraints or for other reasons, the user may need to access the area behind the seat by just reaching back behind the seat from a seated position or from a position at the front of the seat. The headrest may, however, obstruct the access to the area behind the seat.

If the headrest is of the removable type, where it is fitted into slots at the top of the seat back, it can be removed by lifting the headrest out of the slots. This, however, requires both hands of the user. Furthermore, the space above a seat may be restricted, making it difficult to remove the headrest in this way.

There is a need for a headrest design that can be more easily moved to facilitate access to an area behind the headrest.

### SUMMARY

There is provided a seat headrest assembly which enables the headrest to be rotated or twisted to an open position relative to the seat back to allow access to an area that is behind the headrest when it is in its normal position relative to the seat back.

According to one aspect, there is provided a headrest assembly comprising: a headrest; and a mounting assembly for mounting the headrest, in use, to a seat back, the mounting assembly comprising: a first rod extending from a bottom of the headrest at a first location; a second rod extending from the bottom of the headrest at a second location; a first mounting part having a housing with a channel extending therethrough defining an axis and arranged to receive the first rod for rotation about the axis relative to the housing, the first mounting part configured to be attached, in use, to the seat back; a second mounting part having a housing with a channel extending therethrough arranged to receive the second rod, the housing of the second mounting part being rotatable relative to the second rod and having a cut-out therethrough via which the second rod can exit the second mounting part channel and housing when the cut-out is rotated to a position aligning with the path the second rod moves on rotation of the headrest relative to the seat about the axis.

In embodiments, the second mounting part comprises the housing and a fixed housing relative to which the housing is rotated to move the position of the cut-out.

The housing and the fixed housing may be rotatably engaged by a threaded engagement. The second rod may be provided with an outer thread and the channel may have an inner thread with which the outer thread rotating engages.

The first mounting part may have a bearing in the channel between the first rod and the housing.

The first rod and the second rod may be opposite ends of a bow,

The headrest may comprise a front part and a back part attached together. These may define a cavity therebetween to receive the rods/the bow.

The assembly may further comprise a mounting plate to which the first and second mounting parts are mounted, the plate configured to be mounted to the seat back, in use.

According to another aspect, there is provided a seat comprising a seat back and a headrest assembly as defined above, mounted thereto.

### BRIEF DESCRIPTION

Examples of the headrest assembly according to the disclosure will now be described with reference to the drawings. It should be noted that these are examples only and that variations are possible within the scope of the claims.
Figure 1 shows a typical seat with headrest in a helicopter environment.
Figure 2 shows a headrest assembly according to this disclosure with the headrest in the normal position relative to the seat back.
Figure 3 shows a headrest assembly such as shown in Fig. 2 but with the headrest in an open position relative to the seat back.
Figure 4 illustrates in more detail, a headrest assembly according to this disclosure with the headrest locked in the normal position relative to the seat back.
Figure 5 illustrates in more detail, a headrest assembly such as shown in Fig. 2 but with the headrest unlocked to be moved to an open position relative to the seat back.
Figure 6 illustrates in more detail the locking/unlocking mechanism of a headrest assembly according to the disclosure.
Figure 7 illustrates in more detail, in a sectional view a headrest assembly according to this disclosure.
Figure 8 is an exploded view of a headrest assembly according to this disclosure.

### DETAILED DESCRIPTION

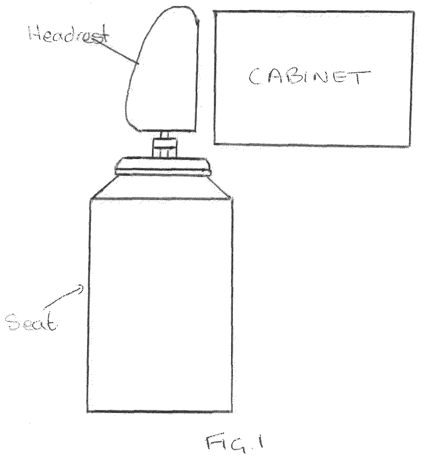

Referring first to Figure 1 to explain the background to this disclosure, as mentioned above, it may be necessary, e.g. in aircraft/helicopter environments or other environments where space is constrained or restricted, to access an area behind a seat. This can be difficult if the seat has a headrest that obstructs access to the area behind it. In some cases, access may be required to e.g. a cabinet behind the headrest. Access may be required, in some cases, quickly or while the seat passenger is performing some other task (e.g. driving). There is, therefore, a need to move the headrest quickly and easily, sometimes in a constrained space, to permit the required access.

The solution provided by the headrest assembly of this disclosure is to provide a mounting assembly for mounting the headrest to the seat back such that the headrest can be rotated between a normal position relative to the seat back and an open position relative to the seat back which allows access to the area which is behind the headrest when it is in its normal position. The headrest can be rotated between the normal and the open position without having to completely remove the headrest from the seat back. In some examples, the headrest assembly also allows the headrest to be locked in the normal position by a releasable locking mechanism which can be released easily e.g. with one hand, to allow the headrest to be rotated to the open position.

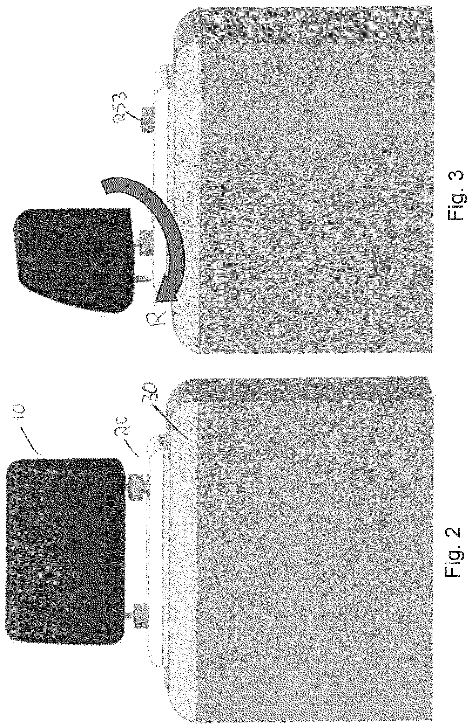

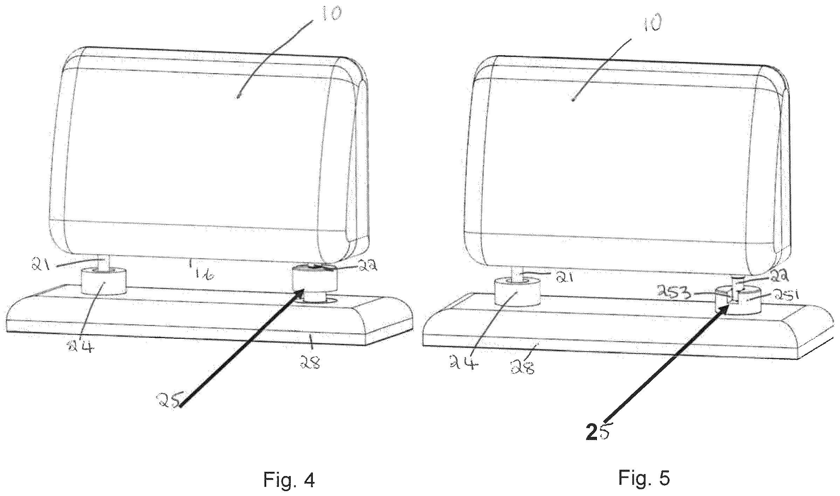

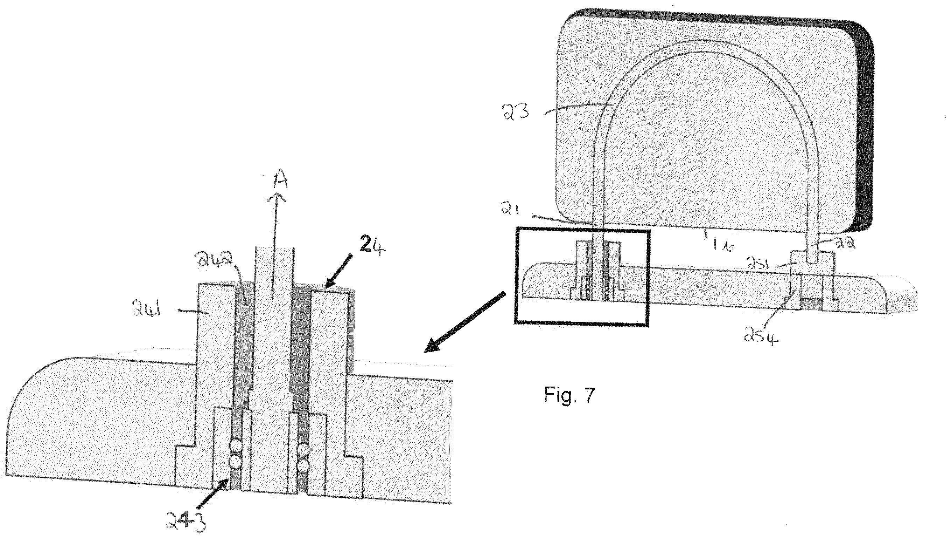

Details of the assembly will be further described with reference to the examples shown in Figs. 2 to 8.

The headrest assembly comprises a headrest 10 and a mounting assembly 20 configured to mount the headrest to a seat back 30, in use.

The headrest 10 may have any suitable shape, size and structure as is known in the field. The headrest should provide a surface against which a person in the seat can rest their head. The surface may be cushioned and/or provided with some form of cover for reasons of comfort, aesthetics, hygiene etc. as is known. In the example shown, the headrest 10 has a front part 11 which may be cushioned and may be shaped to add additional support to the neck area or may just be a simple surface, and a back part 12 which may also be cushioned and/or provided with a cover. The front and back parts 11, 12 are assembled together to define the headrest 10. A cavity 100 may be provided between the front and back parts to accommodate the rods of the mounting assembly, as described further below. In other examples, the headrest may be a simple one-piece assembly or may be formed of several parts assembled together. The rods of the mounting assembly, described further below can, as mentioned above, extend from a cavity within the headrest or can just extend directly from the bottom of the headrest.

The mounting assembly includes a first mounting rod 21 extending from a bottom 1b of the headrest 1 at a first location and a second mounting rod 22 extending from the bottom of the headrest at a second location spaced along the bottom of the headrest from the first location. The first and second mounting rods 21, 22 may be separate rods or may be opposite ends of a single rod 23 curved into a bow inside the headrest 10 such that the ends 21, 22 extend out from the bottom 1b of the headrest at the respective first and second locations.

The mounting assembly further comprises a first mounting part 24 and a second mounting part 25 arranged to be attached, in use, to the top of the seat back, and to receive, respectively, the first and second rods 21, 22 to mount the headrest to the seat back.

The first mounting part 24 comprises a housing 241 through which a channel 242 extends, the channel 242 being open at the top and bottom ends, and through which the first rod 21 extends. The first rod 21 extends through this channel 242 to be rotatable relative to the channel about the axis A defined from the top to the bottom ends, this axis being the axis of rotation of the headrest 10 relative to the seat back 30. Bearings 243 may be provided between the housing and the first rod, in the channel, to facilitate rotation of the first rod relative to the housing.

The first mounting part 24 is, in use, attached to the seat back 30. This may be fastened to the seat back directly, secured by fasteners, adhesive or in some other way. The first mounting part may be arranged such that the first rod 21 extends through the mounting part and into an opening in the seat back or the first rod may be secured in the housing without extending into the seat back. The first mounting part 24 may be mounted to a mounting plate 28 which is, in turn, secured or attached to the seat back.

The second mounting part 25 comprises a rotatable housing 251 and a channel 252 extending therethrough to receive the second rod 22. The rotatable housing 251 has a cut-out 253 in the housing wall reaching to the channel 252. The cut-out 253 is sized to allow the second rod 22 to pass from the channel 252 out of the housing 251 via the cut-out 251 when the cut-out 253 is rotated about the axis of the channel through the rotatable housing to a position aligned with the movement of the second rod when the headrest 10 is rotated relative to the seat back about the axis of rotation A. The second mounting part 25 may also include a fixed housing part 254 with respect to which the rotatable housing 251 can be rotated to the open position where the second rod can exit the channel via the cut-out 253. The rotatable housing 251 may be provided with a thread that engages with a thread on the fixed housing part to allow relative rotation of the rotatable housing part. The rotatable housing part may also have an inner thread within the channel that mates with a thread on the second rod 22 so that the rotatable housing part can be twisted/rotated by a user relative to the second rod 22 to the open position. The screw threads can prevent unintended opening of the second mounting part e.g. due to vibrations

In the example in which the first mounting part is mounted to a plate 28 for attachment to the seat back 30, the second mounting part 25 is also mounted to the plate 28.

Operation of a headrest according to this disclosure can be seen in Figs, 2 and 3.

In the normal position, the headrest 10 is mounted to the top of the seat back 30 in that both the first and the second rod 21, 22 are secured in their respective mounting parts 24, 25. The rotatable housing 251 of the second mounting part is rotated to a position in which the cut-out 253 is not aligned with the direction of movement of the second rod - i.e. the second rod cannot be rotated out of the second mounting part and the headrest is locked in the normal position (Fig. 2).

To move the headrest 10 out of the way, the user unlocks the mounting assembly by rotating the rotatable housing 251 of the second mounting part 25 relative to the second rod 22 until the cut-out 253 is at a position where the second rod 22 can pass therethrough and exit the housing 251 by rotation of the headrest relative to the seat back (direction R seen in Fig. 3) about axis A. Access to the space behind the seat is then possible.

The headrest can then be moved back to its normal position by rotating the headrest in the opposite direction to direction R, relative to the seat back. The second rod enters into the channel of the second mounting part 25 via the cut-out. The rotatable housing 251 is then twisted to move the cut-out so that the path for movement of the second rod out of the second mounting part is closed and the headrest is locked in the normal position again.

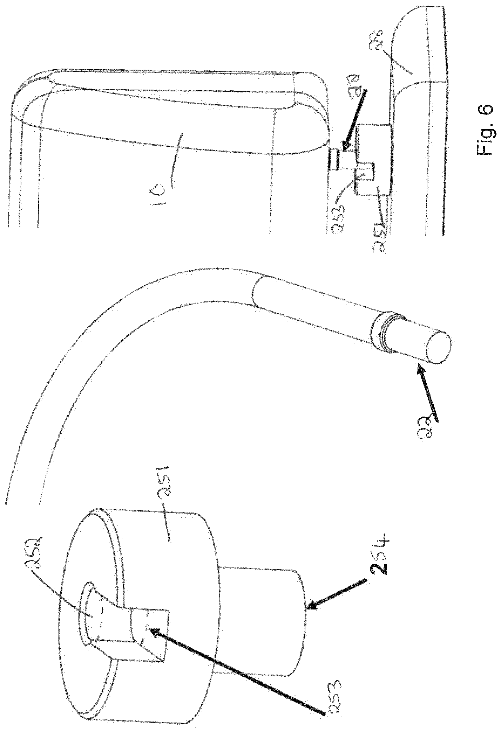

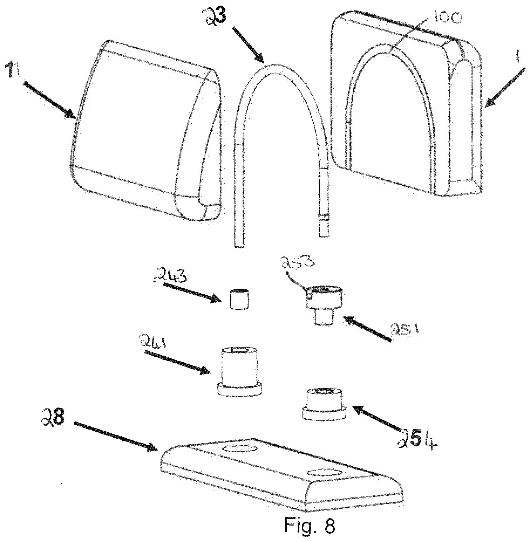

The second mounting part 25 is shown in more detail in Fig. 6 and an exploded view of the described example is shown in Fig. 8.

The assembly of this is disclosure provides a simple way of moving a headrest out of the way to provide access to the space behind. The headrest can be moved using a single-handed operation but can avoid unintended movement due e.g. to vibrations.

## Claims

1. A headrest assembly comprising:
a headrest (10); and
a mounting assembly (20) for mounting the headrest, in use, to a seat back (30), the mounting assembly comprising:
a first rod (21) extending from a bottom of the headrest at a first location;
a second rod (22) extending from the bottom of the headrest at a second location;
a first mounting part (24) having a housing (241) with a channel (242) extending therethrough defining an axis (A) and arranged to receive the first rod (21) for rotation about the axis relative to the housing, the first mounting part configured to be attached, in use, to the seat back;
a second mounting part (25) having a housing with a channel (252) extending therethrough arranged to receive the second rod (22), the housing (251) of the second mounting part (25)being rotatable relative to the second rod (22) and having a cut-out (253) therethrough via which the second rod (22) can exit the second mounting part channel (252) and housing (252) when the cut-out (253) is rotated to a position aligning with the path the second rod (22) moves on rotation of the headrest relative to the seat about the axis (A).

2. The assembly of claim 1, wherein the second mounting part comprises the housing (251) and a fixed housing (254) relative to which the housing (251) is rotated to move the position of the cut-out (253).

3. The assembly of claim 2, wherein the housing (251) and the fixed housing (254) are rotatably engaged by a threaded engagement.

4. The assembly of any preceding claim, wherein the second rod (22) is provided with an outer thread and the channel (252) has an inner thread with which the outer thread rotating engages.

5. The assembly of any preceding claim, wherein the first mounting part (24) has a bearing (243) in the channel between the first rod and the housing.

6. The assembly of any preceding claim, wherein the first rod (21) is a first end of a bent bow (23) and the second rod (22) is the opposite end of the bow (23).

7. The assembly of any preceding claim, wherein the first rod and the second rod extend from inside the headrest.

8. The assembly of any preceding claim, wherein the headrest (10) comprises a front part (11) and a back part (12) attached together.

9. The assembly of claim 8, wherein a cavity (100) is defined between the front part and the back part from which the first and second rods extend.

10. The assembly of any preceding claim, further comprising a mounting plate (28) to which the first and second mounting parts (24, 25) are mounted, the plate (28) configured to be mounted to the seat back, in use.

11. A seat comprising:
a seat back (30); and
a headrest assembly as claimed in any preceding claim mounted thereto.
